(19) **Europäisches Patentamt European Patent Office Office européen des brevets**

(11) **EP 2 151 697 B1**

(12) **FASCICULE DE BREVET EUROPEEN**

(45) Date de publication et mention
de la délivrance du brevet:
**11.09.2013 Bulletin 2013/37**

(51) Int Cl.:
***G01S 5/12*** *(2006.01)* ***G01S 13/00*** *(2006.01)*

(21) Numéro de dépôt: **09166420.1**

(22) Date de dépôt: **27.07.2009**

(54) **Système et procédé de localisation d'un objet mobile communicant**

Verfahren und System zur Lokalisierung eines mobilen kommunizierenden Gegenstands

System and method for locating a communicating mobile object

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.07.2008 FR 0855255**

(43) Date de publication de la demande:
**10.02.2010 Bulletin 2010/06**

(73) Titulaire: **Université des Sciences et Technologies de Lille SAIC 59655 Villeneuve d'Asq (FR)**

(72) Inventeurs:
- **Nasr, Abdelmottaleb**
  **75009 Paris (FR)**
- **Lienard, Martine**
  **62860 Oisy Le Verger (FR)**
- **Degauque, Pierre**
  **59130 Lambersart (FR)**

(74) Mandataire: **Balesta, Pierre et al Cabinet Beau de Loménie Immeuble Eurocentre 179 Boulevard de Turin 59777 Lille (FR)**

(56) Documents cités:
**US-A1- 2002 196 188   US-A1- 2005 179 591 US-A1- 2006 217 132   US-B1- 6 249 680**

- **KAEMARUNGSI K ET AL: "Modeling of indoor positioning systems based on location fingerprinting", INFOCOM 2004. TWENTY-THIRD ANNUALJOINT CONFERENCE OF THE IEEE COMPUTER AND COMMUNICATIONS SOCIETIES, IEEE, PISCATAWAY, NJ, USA, vol. 2, 7 mars 2004 (2004-03-07), pages 1012-1022, XP010740847, ISBN: 978-0-7803-8355-5**
- **SAVVIDES A ET AL: "DYNAMIC FINE-GRAINED LOCALIZATION IN AD-HOC NETWORKS OF SENSORS", PROCEEDINGS OF THE 7TH. ANNUAL INTERNATIONAL CONFERENCE ON MOBILE COMPUTING AND NETWORKING. MOBICOM 2001. ROME, ITALY, JULY 16 - 21, 2001; [ANNUAL INTERNATIONAL CONFERENCE ON MOBILE COMPUTING AND NETWORKING], NEW YORK, NY : ACM, US, vol. CONF. 7, 16 juillet 2001 (2001-07-16) , pages 166-179, XP001072002, ISBN: 978-1-58113-422-3**
- **NICULESCU D ET AL: "Ad hoc positioning system (APS) using AOA", IEEE INFOCOM 2003. TWENTY-SECOND ANNUAL JOINT CONFERENCE OF THE IEEE COMPUTER AND COMMUNICATIONS SOCIETIES (IEEE CAT. NO. 03CH37428) IEEE PISCATAWAY, NJ, USA,, vol. 3, 1 janvier 2003 (2003-01-01), pages 1734-1743VOL, XP002485169,**

**Description**

La présente invention a pour objet un système ainsi qu'un procédé de localisation d'un objet mobile communicant. Elle trouve notamment application à la localisation d'un ou plusieurs objets mobiles communicants dans un environnement confiné ou intérieur. On peut citer à titre d'exemple la localisation d'un caddy dans un supermarché, ou la localisation d'un chariot dans un entrepôt.

On connaît un certain nombre de procédés et de systèmes destinés à localiser un objet mobile dans un tel environnement confiné.

On peut classer ces procédés dans deux grandes catégories. La première concerne les procédés basés sur la reconstitution géométrique du point d'émission du signal utilisé pour la localisation. La seconde concerne les procédés basés sur la notion de signature du signal utilisé pour la localisation.

On connaît également des procédés mixtes basés à la fois sur la reconstitution géométrique du point d'émission du signal et sur sa signature.

Dans les procédés de la première catégorie, on cherche à localiser un objet mobile possédant une antenne d'émission, dans un environnement comprenant plusieurs récepteurs fixes.

Les techniques utilisées sont basées sur la réception du trajet direct. Le problème posé par ces techniques est que toutes les contributions autres que le trajet direct, notamment les signaux réfléchis sur ou diffractés par des obstacles, contribuent au « brouillage » de l'information.

Une première technique de cette catégorie repose sur la mesure de la puissance du signal reçu (voir par exemple : A. Sawides and C. Han and M. B. Strivastava, "Dynamic Fine-Grained Localization in Ad-Hoc Networks of Sensors" in Mobile Computing and Networking, pages 166-179, 2001).

On sait qu'en espace libre, la décroissance de la puissance du signal reçu est inversement proportionnelle au carré de la distance entre l'émetteur et le récepteur. On obtient ainsi des cercles de puissance constante du signal reçu, centrés sur les récepteurs. L'intersection des cercles correspondant à la même puissance pour chaque récepteur donne la position de l'objet à localiser. Chaque récepteur peut donc ne comporter qu'une antenne.

Cette technique de la première catégorie présente l'avantage de reposer sur des modèles mathématiques fiables. Toutefois elle ne prend en compte que les trajets directs, puisqu'elle est basée sur l'hypothèse d'une atténuation ou propagation du trajet direct en milieu confiné qui serait identique à celle en l'espace libre ou dégagé (notamment avec de courtes distances entre émetteur et récepteur).

Cette technique présente donc une faible précision et de mauvaises performances en trajet multiples, que l'on cherche à compenser en augmentant le nombre de récepteurs fixes, qui doit être au minimum égal à trois.

Dans une deuxième technique, on peut également mesurer les temps d'arrivée des signaux en différents points de réception, ou les écarts de temps d'arrivée de ces signaux entre différents points de réception.

Quelque soient les trajets, la vitesse de propagation des ondes est alors constante, égale à celle de la lumière. On se base alors sur l'hypothèse selon laquelle le rayon arrivant en premier, correspondant donc au trajet le plus court, est le rayon direct ou est « peu éloigné » du rayon direct. Il faut donc que ce rayon soit peu masqué.

La position de l'objet mobile à localiser correspond alors à l'intersection des cercles à temps d'arrivée constants pour chaque récepteur.

Cette technique nécessite que le mobile et les récepteurs fixes soient synchronisés. Si l'on mesure des écarts de temps d'arrivée, et non des temps d'arrivée, on peut s'affranchir de cette contrainte de synchronisation, et se contenter alors de synchroniser les récepteurs fixes.

Cette technique présente l'avantage d'être plus précise, en milieu confiné, que la précédente. Toutefois, comme la précédente basée sur la mesure de puissance, cette technique ne prend en compte que les signaux directs ou peu masqués.

En outre, elle nécessite une résolution temporelle élevée et au moins trois stations de réception fixes sont nécessaires pour la localisation.

On peut encore, dans une troisième technique, mesurer les directions d'arrivée des signaux sur les récepteurs (voir par exemple : D. Niculescu, B. Nath, "Ad-hoc positioning system (APS) using AoA", Proceedings of IEEE INFOCOM 2003, April 2003, p. 1734-1743).

Chaque récepteur consiste alors en un réseau formé de plusieurs éléments de réception dont on connaît les positions. On utilise souvent un réseau linéaire mais un réseau circulaire présente aussi de nombreux avantages.

Chaque repère géométrique est lié à chaque réseau de réception, mais cela ne pose aucun problème puisque leur position est parfaitement connue. La direction d'arrivée sur le réseau de réception est déduite du retard entre les champs reçus par les différents éléments. En présence du rayon direct ou « presque direct », chaque réseau récepteur connaît la direction de l'émetteur.

La position de l'émetteur est alors déduite de l'intersection des différentes directions d'arrivée.

Cette technique présente l'avantage de ne nécessiter au minimum que de deux stations de réception fixes.

Toutefois, comme les précédentes, cette technique ne prend en compte que les trajets directs. Sa précision reste donc faible, avec de mauvaises performances dans le cas de trajets multiples.

Enfin, toujours dans cette première catégorie, certains procédés de localisation utilisent une technique mixte basée sur la combinaison de plusieurs des techniques précédentes.

Une telle technique mixte, de précision meilleure, reste basée sur la « triangulation » ou intersection de cercles, avec toujours l'inconvénient de ne prendre en compte que le trajet direct, donc avec de faibles performances en trajets multiples.

Concernant les procédés de la deuxième catégorie présentée plus haut, c'est-à-dire qui sont basés sur la notion de signature du signal, l'objectif visé est de minimiser l'impact des trajets multiples, donc l'écart d'hypothèse entre environnement confiné et espace libre (voir par exemple : K. Kaemarungsi and P. Krishnamurthy, "Modeling of Indoor Positioning Systems based on location Fingerprinting", In IEEE INFOCOM 2004, 2004 ; Y. Chen and H. Hobayashi, "Signal Strength Based Indoor Geolocation", In Processings of IEEE ICC 2002, pages 436-439).

Dans ce contexte, la modélisation théorique de la propagation est très difficile, avec prise en compte de l'aspect tridimensionnel avec tous les obstacles présents.

En général, on dispose d'une banque de mesures des données précédemment mentionnées relativement aux techniques de la première catégorie (puissance, temps d'arrivée, direction d'arrivée des rayons).

Dans une étape d'apprentissage, on mesure toutes ces caractéristiques pour de nombreuses positions du point d'émission. Puis lors de la mesure avec un mobile à localiser, on cherche l'empreinte ou la signature qui se rapproche le plus de celle mesurée.

On obtient une zone de localisation, que l'on peut affiner si nécessaire, par exemple avec une méthode basée sur la mesure de puissance telle que présentée plus haut.

La précision d'une telle méthode, pour une localisation en milieu confiné, est meilleure qu'avec les procédés de la première catégorie.

Néanmoins, une telle méthode nécessite la réalisation d'essais préalables pour le stockage des données (apprentissage) , et mise à jour en cas de changement de configuration.

Une telle méthode est donc fortement dépendante du milieu et des éventuels changements dans ce milieu, avec un espace d'utilisation limité.

En outre, les signatures utilisées ne sont pas uniques, et sont répétitives, et les performances en canal non stationnaire sont faibles.

D'autres procédés sont basés sur une combinaison de techniques de la première catégorie (reconstitution géométrique du point d'émission, basée notamment sur la réception du trajet direct) et de techniques de la deuxième catégorie (utilisation des signatures, avec notamment modélisation complexe et apprentissage lourd). Ils présentent les mêmes inconvénients que ceux mentionnés plus haut (voir par exemple : J. Drummond-Murray, "High résolution localisation for indoor environment", Patent application publication, Pub. No. US 2006/0217132 A1, Pub. Date Sep.28, 2006).

Pour résumer, on distingue donc deux principales catégories de techniques de localisation, à savoir les techniques basées sur la reconstitution des caractéristiques du canal de propagation, et les techniques basées sur l'utilisation de la signature spatiale de l'environnement en question.

Les techniques basées sur la reconstitution des caractéristiques du canal de propagation se distinguent par le ou les paramètres de localisation qu'elles utilisent : puissance du signal reçu par les récepteurs, direction d'arrivée au niveau des récepteurs, temps d'arrivée au niveau des récepteurs, et différence de temps d'arrivée.

Ces techniques, applicables dans un espace à deux dimensions, fournissent des résultats acceptables dans les environnements extérieurs non confinés, ou en espace libre, mais manquent de précision, voire donnent des résultats erronés en environnement intérieur ou environnement confiné.

Les techniques de la seconde catégorie utilisent une base de signatures (puissance, angle d'arrivée, temps d'arrivée, étalement de retard, nombre de trajets réfléchis, ...) recueillies sur un maillage de l'environnement en question. Un algorithme de jumelage permet par la suite de localiser la position du mobile. Ces techniques sont donc complexes, lourdes à mettre en oeuvre, et fortement dépendantes des changements de milieu.

L'objet de l'invention est donc d'apporter une solution aux problèmes précités parmi d'autres problèmes. En particulier, l'invention vise à s'affranchir de la condition de réception du rayon direct ou presque direct, et donc à permettre la localisation avec une bonne précision même en cas de masquage important, c'est-à-dire lorsque les signaux émis et reçus sont susceptibles de subir des réflexions et des diffractions.

A cette fin, l'invention se base sur l'utilisation des directions de départ, des directions d'arrivée et des temps de retard des signaux émis par l'émetteur.

Plus précisément, l'invention se rapporte, selon un premier aspect, à un procédé de localisation d'un objet mobile communicant. L'objet est pourvu d'un réseau d'au moins Ntx éléments d'émission, avec Ntx supérieur ou égal à deux, chacun de ces éléments d'émission étant apte à émettre des signaux.

La localisation est effectuée dans un environnement comprenant au moins deux récepteurs fixes, le premier étant pourvu d'un réseau de Nrx1 éléments de réception et le deuxième étant pourvu d'un réseau de Nrx2 éléments de réception, avec Nrx1 et Nrx2 au moins égaux à deux, ces éléments de réception étant aptes à recevoir les signaux émis par chacun des éléments d'émission de l'objet mobile.

Eventuellement, les deux réseaux de Nrx1 et Nrx2 éléments de réception peuvent être co- localisés, chaque réseau étant dans ce cas relié au même récepteur.

Dans le cas de deux réseaux co-localisés, ces réseaux peuvent partager un ou plusieurs éléments de réception.

Le procédé comprend une étape d'émission d'au moins un signal par chacun des Ntx éléments d'émission de l'objet, et une étape de réception de ce signal par l'ensemble des éléments de réception.

Chaque signal émis par l'émetteur peut suivre de nombreux trajets pour atteindre le ou les récepteurs.

Le procédé comprend ensuite une étape d'extraction des caractéristiques des trajets possibles. La mise en oeuvre du procédé implique que d1 trajets entre l'émetteur et le récepteur Rx1 et d2 trajets entre l'émetteur et le récepteur RX2, puissent être caractérisés, avec d1 et d2 supérieurs ou égaux à 2.

L'étape d'extraction est réalisée à partir de l'ensemble des signaux reçus par les récepteurs fixes. Plus précisément, l'extraction consiste dans le sondage de chaque canal de communication associé à chaque récepteur fixe Rx1 et Rx2 puis dans la mise en oeuvre d'un algorithme de haute résolution sur les données mesurées issues du sondage.

On peut utiliser classiquement des algorithmes de haute résolution connus tels que ESPRIT, MUSIC ou SAGE.

A l'issue de cette étape d'extraction, sont extraites au moins les données suivantes :

- les angles entre les directions d'arrivée respectives des d1 et d2 trajets sur chaque récepteur fixe Rx1 et Rx2, et une direction de référence d'un référentiel fixe de l'environnement,
- les angles relatifs entre les directions de départ respectives des d trajets depuis l'objet à localiser,
- les écarts de temps séparant l'arrivée des trajets sur chacun des réseaux de réception et les écarts de temps séparant l'arrivée des trajets arrivant sur des récepteurs différents.

Cette étape d'extraction permet de déterminer un système de 2 x (n+1) équations dont les 2 x (n+1) inconnues sont les coordonnées de l'objet (Tx) et d'éventuels n obstacles (A, B, C, D), dans le référentiel fixe.

De préférence, à l'issue de cette étape d'extraction, seules les caractéristiques des trajets les plus énergétiques et dont l'écart entre les temps de parcours se situe dans un laps de temps de mesure donné, sont pris en considération. Le nombre minimum de trajets retenus d1 et d2 entre l'émetteur et chacun des récepteurs doit cependant être égal à 2. Cette sélection des trajets permet d'éliminer les trajets peu énergétiques et dont les caractéristiques calculées seront entachées d'erreurs.

Le procédé comprend également une étape de calcul, au moins à partir des données extraites à l'étape précédente, de la position de l'objet et des éventuels obstacles, dans le référentiel fixe, indépendamment de l'orientation du réseau d'éléments d'émission de l'objet.

Cette étape de calcul comprend une étape de résolution du système d'équation préalablement déterminé à l'issue de l'étape d'extraction.

Ainsi, on s'affranchit de la non connaissance de l'orientation du réseau d'émission, par la mesure d'angles de départ relatifs, tout en obtenant une précision de localisation élevée puisque l'on prend en compte les rayons indirects.

Le procédé permet donc de localiser, en milieu confiné, en prenant en compte le rayon direct s'il existe et les rayons ayant subi une réflexion ou une diffraction, un objet mobile dont on ne connaît pas l'orientation du réseau d'émission.

Différentes variantes du procédé sont présentées ci-dessous, qui peuvent être considérées seules ou en combinaison avec une ou plusieurs autres.

On peut prévoir que les éléments d'émission de l'objet mobile émettent des signaux à bande étroite, qui peuvent éventuellement être modulés ou impulsionnels.

Précisément, dans le cas d'une émission en bande étroite, les Ntx éléments d'émission de l'objet mobile émettent chacun Nf signaux sur des fréquences différentes, avec Nf supérieur ou égal à 2.

Ensuite, lors de l'étape de réception, chacun des Nrx1 et Nrx2 éléments de réception respectivement des deux récepteurs fixes, reçoit les Ntx x Nf signaux émis à l'étape d'émission.

L'extraction est alors réalisée à partir des Ntx x Nf signaux reçus à l'étape de réception.

Alternativement, on peut prévoir que les éléments d'émission de l'objet mobile émettent des signaux à large bande, qui sont alors modulés ou impulsionnels.

Précisément, dans ce cas, lors de l'étape d'émission, les Ntx éléments d'émission de l'objet mobile émettent chacun un signal large bande modulé ou impulsionnel.

L'extraction est alors réalisée à partir des Ntx signaux reçus à l'étape de réception, chacun de ces Ntx signaux étant décomposé, préalablement à ou au cours de l'étape d'extraction, en Nf signaux à bande étroite de fréquences différentes, avec Nf supérieur ou égal à 2.

Un signal à large bande peut en effet être considéré comme une superposition de plusieurs signaux à bande étroite, voire une infinité de signaux à bande étroite.

Il est donc possible de réaliser dans les deux cas (Nf signaux à bande étroite ou un signal à large bande) la même extraction sur la base de plusieurs fréquences.

Le nombre de trajets d1 ou d2 identifiables entre l'émetteur et le récepteur Rx1 ou entre l'émetteur et le récepteur Rx2, est ainsi au maximum égal à :

$$\min[(Ntx-1)*Nrx*Nf, \ Ntx*(Nrx-1)*Nf, \ Ntx*Nrx*(Nf-1)]$$

Nrx désignant le nombre d'éléments soit de Rx1 (Nrx1), soit de Rx2 (Nrx2), suivant le récepteur concerné.

Pour que les conditions précédentes sur le nombre de trajets identifiables puissent être satisfaites, cette formule montre que Ntx, Nrx1, Nrx2 et Nf doivent être au minimum égaux à 2.

Dans une variante du procédé, des valeurs plus importantes de Ntx, Rx1, Rx2 et Nf peuvent être choisies pour augmenter le nombre total d=d1+d2 de trajets identifiables et améliorer la précision de localisation du procédé.

Dans une autre variante du procédé basée sur l'émission de signaux à large bande impulsionnels, l'étape d'extraction peut être réalisée directement dans le domaine temporel, à l'aide d'algorithmes de haute résolution connus, sans passer par la décomposition en fréquences.

Pour la résolution du système d'équation obtenu à l'issue de l'étape d'extraction, on peut utiliser par exemple une méthode de type recherche du minimum d'une fonction non-linéaire multivariables, éventuellement sous contraintes.

Une étape de sélection permet de sélectionner, parmi les trajets caractérisés dans l'étape d'extraction, les trajets les plus énergétiques reçus dans un laps de temps de mesure donné, le nombre minimum de trajets d1 et d2 respectivement entre l'émetteur et les récepteurs fixes (Rx1, Rx2) devant être au minimum de 2.

L'invention se rapporte également, selon un deuxième aspect, à un système de localisation d'un objet mobile communicant pourvu d'au moins deux éléments d'émission aptes à émettre Nf signaux différents.

L'environnement comprend au moins deux récepteurs fixes, chacun pourvus d'au moins deux éléments de réception, ces éléments de réception étant aptes à recevoir les Nf signaux émis par chacun des éléments d'émission de l'objet mobile.

Le système comprend un dispositif de traitement pour la mise en oeuvre du procédé tel que présenté ci-dessus.

Le dispositif de traitement comprend, pour chaque récepteur fixe, un module de sélection des caractéristiques des trajets les plus énergétiques reçus par le récepteur fixe et arrivant dans un écart de temps donné.

Alternativement, le module de sélection peut être partagé par les récepteurs fixes, et être alors de préférence localisé au niveau de l'un de ces récepteurs fixes, c'est- à- dire dans ou à proximité de ce récepteur fixe.

Le dispositif de traitement comprend, pour chaque récepteur fixe, un module d'extraction des données caractéristiques des trajets arrivant sur chaque récepteur fixe. Ce module d'extraction est de préférence localisé au niveau du récepteur fixe, c'est-à-dire dans ou à proximité du récepteur fixe.

Alternativement, le module d'extraction est partagé par les récepteurs fixes, de préférence localisé au niveau de l'un de ces récepteurs fixes, c'est- à- dire dans ou à proximité de ce récepteur fixe.

Le dispositif de traitement comprend une unité de traitement pour le calcul, à partir des données caractéristiques des trajets sélectionnés, de la position de l'objet mobile et d'éventuels obstacles dans le référentiel fixe, indépendamment de l'orientation du réseau d'éléments d'émission de l'objet mobile.

L'unité de traitement est distante des récepteurs fixes, ou localisée au niveau de l'un de ces récepteurs fixes, c'est-à-dire dans ou à proximité de ce récepteur fixe.

De préférence, le réseau d'éléments d'émission et les réseaux d'éléments de réception sont linéaires, rectangulaires ou circulaires.

Dans le cas où les récepteurs sont co-localisés, ces récepteurs peuvent comprendre un ou plusieurs éléments de réception en commun.

D'autres caractéristiques et avantages de l'invention apparaîtront plus clairement et de manière complète à la lecture de la description ci-après des variantes préférées de mise en oeuvre du procédé et de réalisation du système, lesquelles sont données à titre d'exemples non limitatifs et en référence au dessin annexé suivant :

- figure 1 : illustre schématiquement le modèle géométrique de propagation auquel s'applique l'invention, dans un exemple de mise en oeuvre,
- figure 2 : illustre schématiquement un exemple du système de l'invention

Dans la présente description, on part de l'hypothèse que l'on réceptionne des rayons directs ou ayant subi une seule réflexion ou diffraction. Les rayons ayant subi plusieurs réflexions ou diffractions dégraderont les performances de localisation s'ils ne peuvent être identifiés.

Dans les méthodes connues décrites plus haut, le rayon direct est repéré comme étant le premier rayon reçu. Si l'effet de masque est important (en raison de la présence d'obstacles), le premier rayon effectivement reçu aura subi une réflexion ou une diffraction (voire plusieurs) entrainant une erreur de localisation.

Dans la présente invention, on prend en compte un certain nombre de trajets (au moins égal à 2) parmi les trajets possibles arrivant sur chacun des réseaux de réception, qui présentent les énergies les plus importantes.

On peut donc s'attendre à détecter dans ce cas le trajet direct (s'il existe) et les trajets ayant subi une réflexion ou, éventuellement, une diffraction.

Les trajets ayant subi des réflexions multiples seront, quant à eux, très atténués, chaque réflexion entraînant une perte d'énergie du signal. Si un tel trajet n'a pu être identifié comme tel après traitement, et donc n'a pu être rejeté, sa contribution pourra augmenter l'erreur sur la localisation du mobile.

Si on tient donc compte des trajets ayant subi une réflexion ou une diffraction, il y a une inconnue supplémentaire par rapport à l'hypothèse de l'espace libre (trajet direct uniquement), la position du point de réflexion ou de diffraction étant inconnue.

Pour augmenter le nombre de données, afin de s'affranchir de ce problème, on utilise un réseau d'éléments d'émission et un réseau d'éléments de réception.

En utilisant des fréquences de transmission élevées, par exemple de l'ordre de 5 GHz, on peut utiliser un réseau d'éléments d'émission, dont la taille est de l'ordre de 10 cm, ce qui est satisfaisant dans le cas de l'implantation de ce réseau sur un caddy de supermarché par exemple.

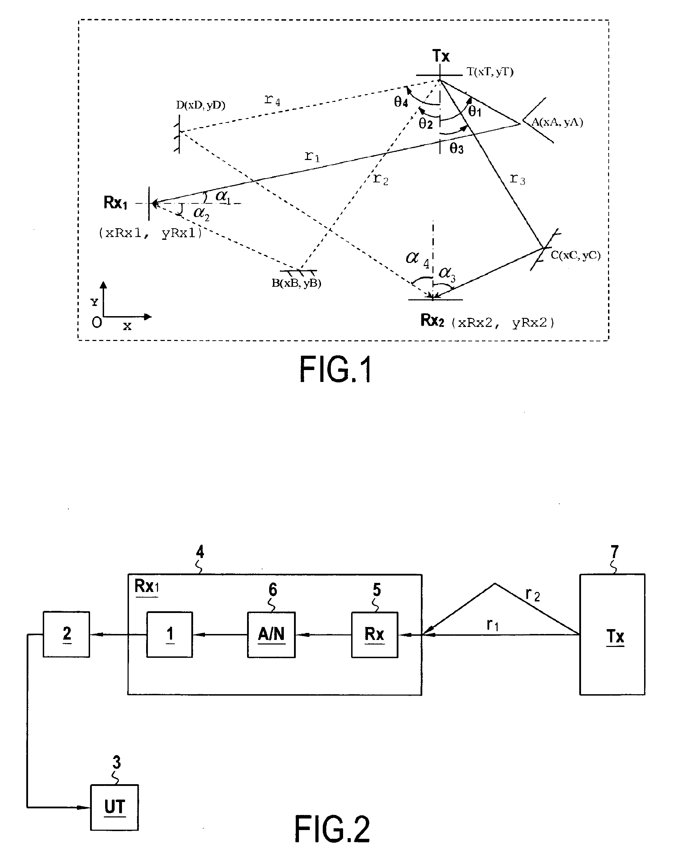

La figure 1 donne un exemple de configuration géométrique de l'environnement.

L'objet mobile à localiser est repéré par Tx, et est donc pourvu d'un réseau d'éléments d'émission.

Rx1 et Rx2 sont 2 récepteurs fixes, pourvus chacun d'un réseau d'éléments de réception.

Dans cet exemple, on considère que les différents réseaux de réception fixes sont de type linéaire. Leurs orientations sont donc connues, par rapport à un système d'axes fixes de référence xOy.

Par contre, non seulement la position de l'objet Tx est inconnue, mais l'orientation de son réseau en émission est également inconnue.

On mesure simultanément les directions de départ relatives, et d'arrivée absolue des trajets, ainsi que les retards relatifs entre les temps de parcours des signaux ayant suivi chacun des trajets reliant l'émetteur aux récepteurs.

Pour cela, on peut utiliser des algorithmes dits de haute résolution connus, tels que ESPRIT, MUSIC ou SAGE. Pour les récepteurs, ces algorithmes permettent donc de calculer les directions d'arrivée dans le repère absolu xOy, puisque les positions et orientations des réseaux de réception sont connues.

Par contre, pour les directions de départ, seules les valeurs relatives des angles seront calculées, c'est-à-dire les angles entre 2 rayons de départ successifs, en raison du fait que l'orientation du réseau Tx est inconnue.

On aboutit alors un système d'équations qui, compte tenu de l'ensemble des données disponibles, peut être résolu, permettant ainsi de calculer les coordonnées de l'ensemble des points de réflexion ou de diffraction (A, B, C et D dans cet exemple) et la position du mobile Tx dans le repère absolu xOy.

La mise en équation est faite en supposant que tous les trajets subissent une réflexion ou une diffraction et une seule. Néanmoins, dans le cas d'un rayon direct, le point de réflexion issu de la phase de traitement sera un point « fictif » qui se situe sur le trajet liant l'émetteur au récepteur.

Pour mettre en oeuvre le procédé, il faut pouvoir mesurer au minimum 2 directions d'arrivée, sur chaque récepteur Rx1 et Rx2.

On peut aussi mesurer 2 retards relatifs par rapport à une référence de temps arbitraire.

On utilise au minimum 2 récepteurs. On remarquera que les méthodes usuelles nécessitent en général 3 récepteurs pour lever ou diminuer les ambiguïtés de position.

Les réseaux de ces 2 récepteurs peuvent éventuellement être co-localisés. Ils sont alors associés au même récepteur fixe Rx1, mais tous se passe, pour la mise en oeuvre du procédé de l'invention, comme si on était en présence de deux récepteurs fixes Rx1 et Rx2 localisés l'un à côté de l'autre.

Par conséquent, dans toute la présente demande, on parle toujours de deux récepteurs fixes Rx1, Rx2, que les réseaux soient ou non co-localisés ou non.

Ainsi, en cas de réseaux non co- localisés, on sera bien en présence de deux récepteurs fixes Rx1 et Rx2 distincts, comprenant chacun au moins deux éléments de réception.

Dans le cas de réseaux co-localisés, on sera en réalité en présence d'un seul récepteur fixe, mais qui sera assimilé à deux récepteurs fixes Rx1 et Rx2, situés l'un à côté de l'autre et comprenant chacun au minimum deux éléments de réception comme dans le cas de réseaux non co-localisés.

Il est alors possible que chacun de ces récepteurs fixes virtuels Rx1 et Rx2 partage un ou plusieurs éléments de réception (mais pas la totalité).

Ainsi, dans le cas de deux récepteurs co- localisés, chacun comprenant au minimum deux éléments d'émission, mais ne partageant aucun de ces éléments d'émission, on aura au minimum quatre éléments d'émission.

Par contre, dans le cas de deux récepteurs co-localisés, chacun comprenant au minimum deux éléments d'émission, mais partageant au moins un élément d'émission, on aura au minimum trois éléments d'émission.

Que ces réseaux soient ou non co-localisés, cela impose que chaque réseau de réception comporte au minimum 2 éléments, l'espacement entre éléments de réception étant usuellement légèrement inférieur à une demi longueur d'onde.

A titre d'exemple, pour une fréquence de 5 GHz, cet espacement sera de l'ordre de 3 cm.

En fonction de la géométrie du milieu confiné, il peut être intéressant de caractériser plus de 2 trajets entre l'émetteur et chacun des récepteurs.

Au niveau de l'émetteur mobile à localiser Tx, on détecte les directions de départ, séparément mais simultanément, vers chaque récepteur Rx1 et Rx2.

Bien sûr, le procédé s'étend à la localisation de plusieurs objets mobiles, en s'appuyant, par exemple, sur les techniques TDMA (Time Division Multiple Access), dans lesquelles chaque émetteur émet durant un intervalle de temps très court, ou CDMA (Code Division Multiple Access).

Ainsi, en revenant plus précisément à l'exemple de la figure 1, le mobile Tx dont on souhaite connaître la position, donc ses coordonnées $x_T$, $y_T$, dispose d'un réseau comprenant au moins 2 éléments d'émission, chacun d'eux émettant successivement au moins 2 signaux à bande étroite sur deux fréquences différentes.

Une variante consisterait à remplacer l'émission de ces deux signaux à bande étroite par une l'émission d'un signal à large bande décomposable intrinsèquement en une superposition de plusieurs (au minimum 2) signaux à bande étroite.

Une autre variante consisterait en une émission simultanée de chacun des éléments du réseau en se basant sur une technique de type CDMA.

Comme déjà indiqué plus haut, la disposition des éléments du réseau peut être quelconque, les configurations les plus usuelles correspondant à un réseau linéaire, rectangulaire ou circulaire uniforme.

Comme le mobile peut se déplacer de façon aléatoire dans son environnement, l'orientation du réseau est inconnue.

Au moins 2 récepteurs fixes Rx1 et Rx2 sont donc implantés en des points dont les coordonnées $x_{Rx1}$, $y_{Rx1}$ et $x_{Rx2}$, $y_{Rx2}$ sont parfaitement connues.

Chacun de ces récepteurs Rx1 et Rx2 dispose également d'un réseau d'au moins 2 éléments de réception, mais dont l'orientation est connue.

Les ondes émises par l'émetteur Tx peuvent atteindre les récepteurs Rx1 et Rx2 en suivant une ligne droite. On se trouve alors en présence du trajet direct. Ceci se produit en l'absence d'obstacle entre Tx et Rx1 ou Rx2.

En milieu confiné, ce trajet direct peut être masqué ou non mais, dans tous les cas, d'autres trajets sont possibles pour les rayons. Comme le montre la figure 1, ces rayons peuvent, par exemple, se réfléchir en un point B de coordonnées inconnues $x_B$, $y_B$, C de coordonnées inconnues $x_C$, $y_C$, ou D de coordonnées inconnues $x_D$, $y_D$, c'est-à-dire sur un obstacle ou une paroi. Ces rayons peuvent aussi subir une diffraction sur une arête en un point A de coordonnées $x_A$, $y_A$ inconnues.

Pour la mise en oeuvre de ce procédé, on suppose que les trajets les plus énergétiques sont ceux ayant subi le nombre minimum de réflexion et/ou de diffraction. On suppose donc que les trajets caractérisés sont le trajet direct s'il existe, et les trajets n'ayant subi qu'une seule réflexion ou une seule diffraction. S'il s'avérait qu'un des trajets caractérisés ait subi des réflexions multiples et qu'il n'ait pu être identifié en tant que tel lors du traitement, cela entraînerait une diminution de la précision de localisation.

Dans l'exemple représenté à la figure 1, on se limite, pour illustrer le procédé et sans que cela ne soit limitatif, à deux trajets possibles entre l'objet Tx et chaque récepteur Rx1 et Rx2.

Dans cette variante, s'il existe d'autres trajets possibles, on se limite néanmoins à la caractérisation des deux trajets les plus courts et/ou énergétiques comme indiqué plus haut.

Toutefois, la considération d'autres trajets ayant subi au plus une réflexion ou diffraction, s'ils existent, permet d'améliorer la précision de la localisation.

Dans cet exemple, on aboutit donc à un problème à 10 inconnues, chaque inconnue correspondant à l'abscisse et à l'ordonnée des points réfléchissants ou diffractants A, B, C et D et du mobile Tx. Il faut donc disposer d'un nombre identique ou supérieur d'équations.

Les angles de départ des trajets repérés par rapport à une direction liée à l'orientation du réseau d'émission, ne peuvent être définis qu'à une constante près, puisque l'orientation du réseau est inconnue.

On va donc mesurer les angles entre trajets, donc les angles relatifs, et non les angles absolus par rapport à l'orientation du réseau. Les angles absolus sont repérés sur la figure 1 par $\theta 1$, $\theta 2$, $\theta 3$, $\theta 4$. Ces angles de départs peuvent aussi être appelés directions de départ (absolues dans le repère fixe xOy).

Les angles relatifs sont donc les angles $\theta 2 - \theta 1$ (angle entre la direction de départ du trajet r2 et la direction de départ du trajet r1), $\theta 4 - \theta 3$ (angle entre la direction de départ du trajet r4 et la direction de départ du trajet r3), et $\theta 3 - \theta 2$ (angle entre la direction de départ du trajet r3 et la direction de départ du trajet r2), $\theta 3 - \theta 1$ (angle entre la direction de départ du trajet r3 et la direction de départ du trajet r1), $\theta 4 - \theta 1$ (angle entre la direction de départ du trajet r4 et la direction de départ du trajet r1), et $\theta 4 - \theta 2$ (angle entre la direction de départ du trajet r4 et la direction de départ du trajet r2)

Pour éviter d'avoir à synchroniser avec précision le mobile Tx et les récepteurs Rx1 et Rx2, et ainsi simplifier la réalisation pratique du système, les temps de parcours de l'onde le long des trajets seront définis à une constante près. En conséquence, on préfère mesurer l'écart entre les temps de parcours de 2 trajets (par exemple entre les trajets r1 et r2 et entre les trajets r3 et r4).

Par contre, les réseaux fixes Rx1 et Rx2 sont supposés être synchronisés entre eux par une horloge commune. Cette contrainte ne constitue pas un problème dans la mesure où l'implantation d'une liaison filaire ou sans-fil entre Rx1 et Rx2 est tout à fait envisageable.

Ceci permet donc de mesurer l'écart entre les temps de parcours d'un trajet aboutissant à Rx1 et d'un trajet aboutissant à Rx2 (par exemple entre les trajets r1 et r3).

Par ailleurs, les récepteurs Rx1 et Rx2 étant parfaitement définis en position et en orientation, les directions d'arrivée $\alpha1$, $\alpha2$, $\alpha3$, $\alpha4$ des trajets pourront être déterminées de façon absolue, c'est-à-dire dans le repère fixe xOy. Par direction d'arrivée absolue dans le repère fixe xOy, on entend l'angle entre une direction d'arrivée et une direction de référence du référentiel ou repère fixe xOy

Cet ensemble de données mène à un nombre d'équations identique à celui du nombre d'inconnues. On peut alors calculer les coordonnées de tous les points (A, B, C, D, Tx) permettant de caractériser les trajets r1 et r2 reliant Tx à Rx1, d'une part, et les trajets r3 et r4 reliant Tx à Rx2 d'autre part.

La résolution de ce système d'équations se fait de préférence par des méthodes classiques basées, par exemple, sur la recherche du minimum d'une fonction non linéaire multi variables, éventuellement sous contraintes.

On remarquera que, en présence du trajet direct entre l'objet Tx et un ou deux récepteurs Rx1 et Rx2, l'un ou deux des points A, B, C ou D mentionnés précédemment seront trouvés sur la ou les droites reliant l'objet Tx au(x) récepteur(s) concerné(s).

Compte tenu de la rapidité des mesures vis-à-vis de la vitesse de déplacement du mobile, on peut supposer que, durant l'acquisition d'une série de mesures, l'objet Tx et les objets environnants sont immobiles, ce qui n'engendre pas de problème pour l'estimation des différents angles.

Sur l'exemple représenté à la figure 1, les deux récepteurs Rx1 et Rx2 présentent des coordonnées prédéfinies dans un espace nommé E, muni d'une référence absolue.

Pour l'exemple, on suppose que l'on reçoit en Rx1 et en Rx2 au moins deux rayons dont chacun a subi au maximum une réflexion.

Le procédé décrit dans l'exemple ci-dessous reste néanmoins valable si un de ces au moins deux rayons correspond à un trajet direct.

L'estimation des deux directions d'arrivée et de la différence des temps de retard, relativement aux deux rayons au niveau du canal de communication, ou encore canal de propagation associé à Rx1, que l'on nomme Tx-Rx1, donne lieu à trois équations dépendantes des coordonnées de l'émetteur Tx et des points de réflexion A et B.

Par analogie, le second canal de communication ou de propagation associé à Rx2, appelé Tx-Rx2, donne lieu également à trois équations dépendantes des coordonnés des points de l'émetteur Tx et des points de réflexion C et D.

Du côté de l'émission, on déduit des quatre directions de départ trois équations dépendantes des coordonnées de Tx et nommées (xT, yT) et des points de réflexion.

En effet, la détermination d'une direction de départ absolue suppose la connaissance de l'orientation du réseau d'émission Tx, ce qui n'est pas le cas.

Dans la présente invention, il n'est donc pas possible de mettre en oeuvre un procédé se basant sur la détermination d'une direction de départ absolue. Les trois équations en question ne feront par conséquent intervenir que la différence entre les angles de départ, ou encore les angles relatifs entre les directions de départ.

Enfin, l'hypothèse de synchronisation entre Rx1 et Rx2 permet de comparer les longueurs de deux rayons de deux canaux, ce qui donne lieu à une autre équation.

On se retrouve donc au total avec 2 x (n + 1) équations telles que présentées ci-dessus, et 2 x (n + 1) inconnues, avec n correspondant au nombre d'obstacles ou points de réflexion.

Avec 4 obstacles ou points de réflexion A, B , C et D, on obtient donc 10 équations et 10 inconnues (les coordonnées bidimensionnelles des 4 points de réflexion A, B, C et D, et de l'émetteur Tx).

Précisément :

- les inconnues associées au canal Tx-Rx1 sont : (xA, yA), (xB, yB), (xT, yT),
- les inconnues associées au canal Tx-Rx2 sont : (xC, yC), (xD, yD), (xT, yT).

Les coordonnées de Rx1 (xRx1, yRx1) et de Rx2 (xRx2, yRx2) sont quant à elles connues.

Par ailleurs, les données estimées de façon conjointe au niveau des deux canaux Tx- Rx1 et Tx- Rx2, par sondage de ces deux canaux et par mise en oeuvre d'un algorithme de haute résolution, sont les paramètres ($\delta\tau_i$, $\alpha_i$, $\theta_i$) des équations formant le système d'équation à résoudre.

Ces données sont présentées dans le tableau 1 ci-dessous, regroupées par canal.

*Tableau 1*

| Canal : Tx-Rx1 | | Canal : Tx-Rx2 | |
|---|---|---|---|
| $\delta\tau_{12}$ : | la différence des temps d'arrivées de $r_1$ et $r_2$ | $\delta\tau_{34}$ : | la différence des temps d'arrivées de $r_3$ et $r_4$ |
| $\alpha_1$ : | la direction d'arrivée de $r_1$ | $\alpha_3$ : | la direction d'arrivée de $r_3$ |
| $\alpha_2$ : | la direction d'arrivée de $r_2$ | $\alpha_4$ : | la direction d'arrivée de $r_4$ |
| $\theta_1 =$ | la direction de départ de $r_1$ vers Rx1 | $\theta_3 =$ | la direction de départ de $r_3$ vers Rx2 |
| $\theta_2 =$ | la direction de départ de $r_2$ vers Rx1 | $\theta_4 =$ | la direction de départ de $r_4$ vers Rx2. |
| $\delta\tau$ : la différence des temps d'arrivées de $r_1$ et $r_3$ | | | |

On constate que $\delta\tau$, correspondant à la différence des temps d'arrivée de r1 et r3, est évidemment associée à la fois au canal Tx-Rx1 et au canal Tx-Rx2.

La résolution du système de 10 équations à 10 inconnues peut alors être obtenue, à titre d'exemple, par le calcul du minimum d'une fonction f non-linéaire multi-variable.

D'autres méthodes sont cependant envisageables que la minimisation d'une telle fonction.

La minimisation de cette fonction f est un problème mathématique que l'on peut par exemple résoudre à l'aide d'un outil du type « toolbox Optimisation » de MATLAB.

Ce problème peut être posé mathématiquement de la façon suivante :

$$\min_{x} \quad f(x)$$
$$a(x) \leq 0$$
$$a_{eq}(x) \leq 0$$
$$E \cdot x \leq 0$$
$$E_{eq} \cdot x = b_{eq}$$
$$lb \leq x \leq ub$$

où

- **b, b_{eq}, lb,** et **ub** sont des vecteurs,
- **E** et **E_{eq}** sont deux matrices,
- **a(x)** et **a_{eq}(x)** sont deux fonctions qui retournent des vecteurs,
- $\chi = [xA, yA, xB, yB, xC, yC, xD, yD, xT, yT]^T$ est un vecteur de taille 10 contenant les coordonnées des points de réflexion et celles de l'émetteur.

Afin d'approcher le mieux possible la position exacte de l'émetteur Tx, on peut soumettre le système d'équations à des contraintes supplémentaires comme la limitation du domaine de recherche des inconnues (réduction des domaines de variation des inconnues en fonction des dimensions de l'environnement considéré, et soustraction l'intérieur des sous-espaces fermés), l'utilisation des angles orientés en réception (réduction du domaine de variation des coordonnées des points de réflexion en se limitant au demi-plan en fonction du signe des paramètres directionnels à la réception), ou l'utilisation des angles orientés en émission (vérification du produit scalaire et vectoriel entre toutes les directions de départ).

Ces contraintes peuvent être de nature linéaire ou non-linéaire et être mise sous forme d'égalité ou d'inégalité.

Dans le tableau 2 ci-dessous sont présentés, regroupés par canal, quelques exemples d'équations que le système d'équations peut comprendre. Certaines de ces équations sont associées à la fois au canal Tx-Rx1 et au canal Tx-Rx2.

Il est à noter par ailleurs que ces équations, en particulier celles qui comprennent des expressions trigonométriques, peuvent prendre d'autres formes.

*Tableau 2*

| Canal Tx-Rx1 | Canal Tx-Rx2 |
|---|---|
| $$tg(\alpha_1) = \frac{yA - yRx1}{xA - xRx1} \quad (1)$$ $$tg(\alpha_2) = \frac{yB - yRx1}{xB - xRx1} \quad (2)$$ $$\left(ARx1 + ATx\right) - \left(BRx1 + BTx\right) = c\delta\tau_{12} \quad (3)$$ | $$tg(\alpha_3) = \frac{yC - yRx2}{xC - xRx2} \quad (4)$$ $$tg(\alpha_4) = \frac{yD - yRx2}{xD - xRx2} \quad (5)$$ $$\left(CRx2 + CTx\right) - \left(DRx2 + DTx\right) = c\delta\tau_{34} \quad (6)$$ |

$$\overrightarrow{TxA}.\overrightarrow{TxC} - \left\|\overrightarrow{TxA}\right\| \cdot \left\|\overrightarrow{TxC}\right\| \cdot \cos(\theta_3 - \theta_1) = 0 \quad (7)$$

$$\overrightarrow{TxA}.\overrightarrow{TxD} - \left\|\overrightarrow{TxA}\right\| \cdot \left\|\overrightarrow{TxD}\right\| \cdot \cos(\theta_4 - \theta_1) = 0 \quad (8)$$

$$\overrightarrow{TxB}.\overrightarrow{TxC} - \left\|\overrightarrow{TxB}\right\| \cdot \left\|\overrightarrow{TxC}\right\| \cdot \cos(\theta_3 - \theta_2) = 0 \quad (9)$$

$$\left(\left\|\overrightarrow{TxC}\right\| + \left\|\overrightarrow{CRx2}\right\|\right) - \left(\left\|\overrightarrow{TxA}\right\| + \left\|\overrightarrow{ARx1}\right\|\right) - c \cdot \delta\tau = 0 \quad (10)$$

EP 2 151 697 B1

Comme illustré dans l'exemple de la figure 2, chaque élément rayonnant de l'objet mobile Tx repéré 7 émet donc un signal qui arrive sur un des récepteurs fixes, Rx1 dans cet exemple, et repéré 4.

Rx1 comprend un module de réception 5 qui traitera physiquement les Nf signaux émis par chacun des éléments Ntx de l'émetteur et reçus par chacun des Nrx1 éléments de réception.

Ces signaux sont caractérisés par une grandeur physique analogique correspondant à leurs amplitudes complexes. Ces valeurs analogiques sont converties en des grandeurs numériques par le convertisseur 6.

Ensuite, le module d'extraction repéré 1 extrait les caractéristiques de d1 trajets, ce nombre d1 dépendant de Nrx1, Ntx et Nf. Les caractéristiques des trajets concernent notamment leurs directions de départ et d'arrivée, les retards relatifs entre trajets et leurs énergies.

L'extraction est basée sur l'utilisation d'algorithmes de haute résolution connus comme indiqué plus haut.

Le module d'extraction 1 est de préférence propre au récepteur fixe Rx1, intégré dans ce récepteur ou localisé à proximité.

Ce module d'extraction 1 peut aussi être localisé à distance du récepteur, et communiquer alors avec lui par tout moyen classique filaire ou non filaire.

Ce module d'extraction 1 peut également être partagé par plusieurs récepteurs fixes, ce qui génère des contraintes pour la mise en oeuvre de la sélection (partage de ressources) qui peuvent être gérées de façon appropriées.

Un module de sélection, repéré 2, choisit au moins 2 trajets parmi les trajets les plus énergétiques qui ont été extraits et transmet leurs caractéristiques à l'unité de traitement repéré 3.

Ici encore, le module de sélection 2 est de préférence propre au récepteur fixe Rx1, intégré dans ce récepteur ou localisé à proximité.

On peut aussi envisager que ce module de sélection 2 soit distant du récepteur, et communique avec lui par tout moyen classique filaire ou non filaire.

Ce module de sélection 2 peut également être partagé par plusieurs récepteurs fixes.

On peut utiliser, pour retrouver les directions de départ et d'arrivée des trajets, des dispositifs classiques de type sondeurs de canal.

De tels sondeurs sont spécifiquement adaptés à la détermination de l'ensemble des paramètres absolus de la liaison entre un émetteur et un récepteur, ce qui nécessite, entre autres, une synchronisation de cet émetteur et de ce récepteur. Ce point s'avère particulièrement important pour déterminer les temps de parcours entre Tx et Rx. Cependant, comme la stabilité dans le temps de cette synchronisation est particulièrement délicate à réaliser et ne peut être fiable à long terme, une solution préférable (bien que non obligatoire) est de s'affranchir de cette contrainte en n'utilisant que des différences de temps d'arrivée comme détaillé précédemment.

De plus, les sondeurs de canal classiques étant très coûteux, dans la mesure où ils permettent d'extraire du signal d'autres informations que celles strictement nécessaires à la mise en oeuvre du procédé de l'invention, on utilisera un sondeur de canal, repéré 4, spécifique. La fonction de sondage du canal reste cependant la même.

Par sondage du canal de communication de chaque récepteur fixe Rx1 et Rx2, on obtient des données caractéristiques mesurées, et par mise en oeuvre d'un algorithme de haute résolution tel qu'évoqué plus haut, on obtient un système d'équations à résoudre.

Chaque signal émis par chaque élément de l'objet Tx peut être soit un signal modulé, soit un signal impulsionnel.

Dans le cas d'un signal modulé, il existe deux approches possibles pour effectuer l'émission. Ces approches utilisent différentes techniques : division dans le temps (par exemple, mais ceci n'est nullement limitatif, chacun des éléments du réseau d'émission Tx envoie successivement un message constitué d'un préambule, d'une trame qui peut éventuellement se limiter à un signal sinusoïdal, et d'un drapeau de fin de message ; le numéro de l'élément d'émission est inclus dans le préambule ; le protocole de présentation des données est identique à celui d'une transmission classique) ; multiplexage par étalement de spectre (les éléments de l'objet Tx émettent simultanément des messages, mais l'information délivrée par chaque élément est codée différemment par une technique d'étalement de spectre) ; multi porteuses (OFDM ou Orthogonal Frequency Division Multiplexing ; les multi utilisateurs peuvent être gérés de diverses façons, la plus simple étant d'allouer des fréquences par utilisateur).

Dans le cas d'un signal impulsionnel, chacun des éléments du réseau de l'objet Tx envoie des impulsions qui sont également codées pour que les récepteurs Rx1, Rx2 puissent identifier l'élément d'émission.

Quelque soit la variante pour la transmission, les signaux sont reçus par les éléments des réseaux de réception Rx1 et Rx2. Ces deux récepteurs Rx1 et Rx2 sont reliés entre eux pour que leur base de temps soit synchrone. Le nombre minimum d'éléments de chacun des réseaux est de Nrx1=Nrx2=2. L'émission par chaque élément de l'objet, dont le nombre d'éléments rayonnant Ntx est au moins égal à 2, est soit un signal large bande ou impulsionnel, soit formée d'au moins Nf signaux à bande étroite, ayant des fréquences différentes, avec Nf supérieur ou égal à 2.

Une variante de ce procédé consiste à utiliser un plus grand nombre d'éléments pour chaque réseau et/ou plus un grand nombre de signaux afin d'une part d'augmenter la précision sur les caractéristiques des deux trajets les plus énergétiques qui sont au minimum pris en compte, et, d'autre part, de pouvoir augmenter le nombre de trajets caractérisés, ce qui peut également contribuer à l'augmentation de la précision de localisation.

Les informations extraites par le ou les modules d'extraction 1, au niveau de chacun des récepteurs fixes Rx1 et Rx2, ou à distance de ces récepteurs fixes, sont ensuite envoyées à une unité de sélection des trajets 2 puis à une unité de traitement 3. La position de l'émetteur Tx est ensuite déterminée par cette unité de traitement 3, en résolvant le système d'équations précédemment mentionné.

L'unité de traitement 3 est de préférence distante de chacun des récepteurs fixes Rx1, Rx2, et communique avec ces récepteurs par voie filaire ou non filaire.

Il est aussi possible de prévoir que l'unité de traitement 3 soit intégrée à l'un des récepteurs fixes Rx1, Rx2, ou localisée à proximité de ou dans l'un de ces récepteurs fixes.

On peut envisager de suivre le parcours de l'objet mobile Tx, en utilisant par exemple des critères de vraisemblance basés sur la continuité du parcours, introduits dans le modèle, afin d'éliminer des points aberrants.

Un choix spécifique des positions des récepteurs Rx1 et Rx2 peut introduire des contraintes supplémentaires permettant de faciliter la résolution du système d'équations et d'améliorer le résultat de la localisation.

En outre, dans le cas de déploiement des réseaux d'antennes permettant l'estimation de l'élévation et de l'azimut, et sous les mêmes hypothèses, il est possible d'appliquer le procédé de l'invention pour retrouver les coordonnées tridimensionnelles de l'émetteur Tx.

Il est rappelé que l'ensemble de la description ci-dessus est donné à titre d'exemple, et n'est pas limitatif de l'invention. En particulier, l'invention ne se limite pas à la localisation d'un unique objet mobile, mais s'applique également à la localisation de plusieurs objets mobiles évoluant dans le même environnement.

Par ailleurs, la configuration donnée en figure 1, avec 4 obstacles A, B, C et D, et deux trajets possibles entre l'émetteur Tx et chaque récepteur Rx1 et Rx2, n'est qu'un exemple non limitatif de l'invention, comme il a été expliqué plus haut.

De plus, la représentation du système de l'invention à la figure 2 est une représentation fonctionnelle, non limitative. En particulier, on pourrait très bien envisager de disposer l'ensemble de l'intelligence du système, y compris l'unité de traitement 3, dans un des récepteurs fixes Rx1 ou Rx2, comme expliqué ci-dessus.

Il est également possible d'éclater un module en différents sous-modules physiquement disposés en différents endroits du système.

De plus, on rappellera une nouvelle fois que le nombre minimum de récepteur fixes est deux, mais que ces deux récepteurs peuvent être co-localisés, leur réseau étant alors relié au même récepteur. Néanmoins, pour la mise en oeuvre du procédé de l'invention, on considère alors que le récepteur comprend bien deux réseaux de réception distincts localisés l'un à côté de l'autre.

Enfin, le procédé et le système de l'invention concernent un objet mobile comprenant un réseau d'éléments d'émission qui émettent indifféremment des signaux à bande étroite ou des signaux large bande, comme cela a été expliqué plus haut.

**Revendications**

1. Procédé de localisation d'un objet mobile communicant (Tx) pourvu d'un réseau de Ntx éléments d'émission, avec Ntx supérieur ou égal à deux, ces dits éléments d'émission étant aptes à émettre des signaux , dans un environnement comprenant au moins deux récepteurs fixes (Rx1, Rx2) synchronisés, éventuellement co-localisés, pourvus respectivement de Nrx1 et Nrx2 éléments de réception, avec Nrx1 et Nrx2 au moins égaux à 2, lesdits éléments de réception étant aptes à recevoir lesdits signaux émis par lesdits éléments d'émission dudit objet mobile (Tx), ledit procédé comprenant au moins les étapes suivantes :

   - émission d'au moins un signal par chacun desdits Ntx éléments d'émission dudit objet (Tx),
   - réception, par chacun desdits Nrx1 et Nrx2 éléments de réception respectivement desdits deux récepteurs fixes (Rx1, Rx2), desdits au moins Ntx signaux émis à l'étape d'émission,
   - extraction, à partir desdits signaux reçus à l'étape de réception, par sondage de chaque canal de communication associé à chaque récepteur fixe (Rx1, Rx2) puis mise en oeuvre d'un algorithme de haute résolution sur les mesures issues du sondage, des données suivantes :

      i. les angles entre les directions d'arrivée respectives des d1 et d2 trajets (r1 à r4) sur chaque récepteur fixe (Rx1, Rx2) et une direction de référence d'un référentiel fixe de l'environnement, avec d1 et d2 supérieurs ou égaux à 2, les d1 et d2 trajets pris en compte désignant respectivement le nombre de trajets entre l'objet et l'un des deux récepteurs fixes, et le nombre de trajets entre l'objet et l'autre récepteur fixe, et n'ayant subi qu'une seule réflexion ou diffraction sur n obstacles réels ou fictifs (A, B, C, D), de sorte que d1 + d2 = n,
      ii. les angles relatifs entre les directions de départ respectives des d1 et d2 trajets (r1 à r4) depuis ledit objet (Tx),,

iii. les écarts de temps séparant l'arrivée des d1 et d2 trajets arrivant respectivement sur Rx1 et Rx2, et les écarts de temps séparant l'arrivée des trajets arrivant sur des récepteurs différents, de façon à déterminer un système de 2 x (n+1) équations dont les 2 x (n+1) inconnues sont les coordonnées de l'objet (Tx) et desdits obstacles réels ou fictifs (A, B, C, D), dans ledit référentiel fixe,

- calcul, au moins à partir desdites données extraites, de la position dudit objet (Tx) et desdits obstacles (A, B, C, D) dans ledit référentiel fixe, indépendamment de l'orientation dudit réseau d'éléments d'émission dudit objet (Tx), ledit calcul comprenant une étape de résolution dudit système d'équation.

2. Procédé selon la revendication 1, dans lequel :

- lors de l'étape d'émission, les Ntx éléments d'émission de l'objet mobile (Tx) émettent chacun Nf signaux à bande étroite, éventuellement modulés ou impulsionnels, sur des fréquences différentes, avec Nf supérieur ou égal à 2,
- lors de l'étape de réception, chacun des Nrx1 et Nrx2 éléments de réception respectivement desdits deux récepteurs fixes (Rx1, Rx2), reçoit les Ntx x Nf signaux émis à l'étape d'émission,
- l'extraction est réalisée à partir des Ntx x Nf signaux reçus à l'étape de réception.

3. Procédé selon la revendication 1, dans lequel

- lors de l'étape d'émission, les Ntx éléments d'émission de l'objet mobile (Tx) émettent chacun un signal à large bande modulé ou impulsionnel,
- l'extraction est réalisée à partir des Ntx signaux reçus à l'étape de réception, chacun de ces dits Ntx signaux étant décomposé, préalablement à ou au cours de l'étape d'extraction, en Nf signaux à bande étroite de fréquences différentes, avec Nf supérieur ou égal à 2.

4. Procédé selon la revendication 1, dans lequel

- lors de l'étape d'émission, les Ntx éléments d'émission de l'objet mobile (Tx) émettent chacun un signal à large bande impulsionnel,
- l'extraction est réalisée directement à partir des Ntx signaux reçus à l'étape de réception, sans décomposition en signaux à bande étroite.

5. Procédé selon l'une quelconque des revendications 1 à 4, dans lequel la résolution du système d'équation est obtenue par une méthode de type recherche du minimum d'une fonction non-linéaire multivariables.

6. Procédé selon l'une quelconque des revendications 1 à 4, comprenant une étape de sélection pour sélectionner, parmi les trajets caractérisés dans l'étape d'extraction, les trajets les plus énergétiques reçus dans un laps de temps de mesure donné, le nombre minimum de trajets d1 et d2 respectivement entre l'émetteur et les récepteurs fixes (Rx1, Rx2) devant être au minimum de 2.

7. Système de localisation d'un objet mobile communicant (Tx) pourvu d'au moins deux éléments d'émission aptes à émettre des signaux à bande étroite sur plusieurs fréquences ou des signaux large bande, comprenant au moins deux récepteurs fixes (Rx1, Rx2) synchronisés, éventuellement co-localisés, pourvus chacun d'au moins deux éléments de réception, ces dits éléments de réception étant aptes à recevoir lesdits signaux émis par chacun desdits éléments d'émission dudit objet mobile (Tx), et comprenant un dispositif de traitement configuré pour la mise en oeuvre du procédé selon l'une quelconque des revendications précédentes.

8. Système selon la revendication 7, dans lequel le dispositif de traitement comprend, pour chaque récepteur fixe (Rx1, Rx2), un module de sélection (2) des trajets les plus énergétiques reçus par ledit récepteur fixe (Rx1, Rx2), de préférence localisé au niveau de ce dit récepteur fixe (Rx1, Rx2).

9. Système selon la revendication 7, dans lequel le dispositif de traitement comprend un module, partagé par lesdits récepteurs fixes (Rx1, Rx2), de sélection (2) des trajets les plus énergétiques reçus par lesdits récepteurs fixes (Rx1, Rx2), de préférence localisé au niveau de l'un de ces dits récepteurs fixes (Rx1, Rx2).

10. Système selon l'une quelconque des revendications 7 à 9, dans lequel le dispositif de traitement comprend, pour chaque récepteur fixe (Rx1, Rx2), un module d'extraction (1) pour l'extraction des données caractéristiques des trajets reçus par ledit récepteur fixe (Rx1, Rx2), de préférence localisé au niveau de ce dit récepteur fixe (Rx1, Rx2).

11. Système selon l'une quelconque des revendications 7 à 9, dans lequel le dispositif de traitement comprend un module, partagé par lesdits récepteurs fixes (Rx1, Rx2), d'extraction (1) pour l'extraction des données caractéristiques des trajets reçus par lesdits récepteurs fixes (Rx1, Rx2), de préférence localisé au niveau de l'un de ces dits récepteurs fixes (Rx1, Rx2).

12. Système selon l'une quelconque des revendications 10 et 11, dans lequel le dispositif de traitement comprend une unité de traitement (3) pour le calcul, à partir des données extraites par le ou les module d'extraction (1), de la position de l'objet (Tx) et des obstacles (A, B, C, D) dans le référentiel fixe, indépendamment de l'orientation du réseau d'éléments d'émission dudit objet (Tx).

13. Système selon la revendication 12, **caractérisé en ce que** l'unité de traitement est distante des récepteurs fixes (Rx1, Rx2), ou localisée au niveau de l'un de ces dits récepteurs fixes (Rx1, Rx2).

14. Système selon l'une quelconque des revendications 7 à 13, dans lequel le réseau d'éléments d'émission et les réseaux de réception sont de forme linéaires, rectangulaires ou circulaires.

15. Système selon l'une quelconque des revendications 7 à 14, dans lequel les récepteurs (Rx1, Rx2) sont co-localisés, et dans lequel lesdits récepteurs (Rx1, Rx2) comprennent au moins un élément de réception en commun.

## Patentansprüche

1. Verfahren zur Lokalisierung eines kommunizierenden beweglichen Objekts (Tx), das mit einem Netz aus Ntx Sendeelementen, mit Ntx größer oder gleich zwei, versehen ist, wobei diese Sendeelemente geeignet sind, in einer Umgebung, die wenigstens zwei feste synchronisierte, eventuell örtlich gemeinsam aufgestellte Empfänger (Rx1, Rx2) umfaßt, welche mit Nrx1 bzw. Nrx2 Empfangselementen, mit Nrx1 und Nrx2 wenigstens gleich 2, versehen sind, Signale zu senden, wobei die Empfangselemente geeignet sind, die durch die Sendeelemente des beweglichen Objekts (Tx) gesendeten Signale zu empfangen, wobei das Verfahren wenigstens die folgenden Schritte umfaßt:

- Senden wenigstens eines Signals durch jedes der Ntx Sendeelemente des Objekts (Tx),
- Empfangen der beim Sendeschritt gesendeten wenigstens Ntx Signale durch jedes der Nrx1 bzw. Nrx2 Empfangselemente der beiden festen Empfänger (Rx1, Rx2),
- Extrahieren der folgenden Daten aus den beim Empfangsschritt empfangenen Signalen durch Sondieren eines jeden Kommunikationskanals, der jedem festen Empfänger (Rx1, Rx2) zugeordnet ist, anschließend Anwenden eines hochauflösenden Algorithmus auf die aus der Sondierung hervorgegangenen Meßwerte:

   i. die Winkel zwischen den jeweiligen Eintreffrichtungen der d1 und d2 Strecken (r1 bis r4) an jedem festen Empfänger (Rx1, Rx2) und einer Bezugsrichtung eines festen Referenzsystems der Umgebung, mit d1 und d2 größer oder gleich 2, wobei die berücksichtigten d1 und d2 Strecken jeweils die Anzahl von Strecken zwischen dem Objekt und einem der beiden festen Empfänger sowie die Anzahl von Strecken zwischen dem Objekt und dem anderen festen Empfänger angeben und lediglich eine einzige Reflektion oder Beugung an n tatsächlichen oder fiktiven Hindernissen (A, B, C, D) erfahren haben, so daß $d1 + d2 = n$,
   ii. die Relativwinkel zwischen den jeweiligen Ausgangsrichtungen der d1 und d2 Strecken (r1 bis r4) von dem Objekt (Tx) aus,
   iii. die Zeitabstände zwischen dem Eintreffen der bei Rx1 bzw. Rx2 ankommenden d1 und d2 Strecken und die Zeitabstände zwischen dem Eintreffen der bei anderen Empfängern ankommenden Strecken,
   um ein System aus $2 \times (n+1)$ Gleichungen zu bestimmen, wovon die $2 \times (n+1)$ Unbekannten die Koordinaten des Objekts (Tx) und der tatsächlichen oder fiktiven Hindernisse (A, B, C, D) in dem festen Referenzsystem sind,

- Berechnen, wenigstens aus den extrahierten Daten, der Position des Objekts (Tx) und der Hindernisse (A, B, C, D) in dem festen Referenzsystem, unabhängig von der Ausrichtung des Sendeelementnetzes des Objekts (Tx), wobei die Berechnung einen Schritt zur Auflösung des Gleichungssystems umfaßt.

2. Verfahren nach Anspruch 1, wobei:

- während des Sendeschrittes die Ntx Sendeelemente des beweglichen Objekts (Tx) jeweils Nf Schmalbandsignale, die eventuell moduliert oder Impulssignale sind, auf unterschiedlichen Frequenzen senden, mit Nf größer oder gleich 2,
- während des Empfangsschrittes ein jedes der Nrx1 bzw. Nrx2 Empfangselemente der beiden festen Empfänger (Rx1, Rx2) die beim Sendeschritt gesendeten Ntx x Nf Signale empfängt,
- das Extrahieren anhand der beim Empfangsschritt empfangenen Ntx x Nf Signale durchgeführt wird.

3. Verfahren nach Anspruch 1, wobei

- während des Sendeschrittes die Ntx Sendeelemente des beweglichen Objekts (Tx) jeweils ein moduliertes oder Impuls-Breitbandsignal senden,
- das Extrahieren anhand der beim Empfangsschritt empfangenen Ntx Signale durchgeführt wird, wobei ein jedes dieser Ntx Signale zuvor oder im Laufe des Extraktionsschrittes in Nf Schmalbandsingale unterschiedlicher Frequenzen, mit Nf größer oder gleich 2, zerlegt wird.

4. Verfahren nach Anspruch 1, wobei

- während des Sendeschrittes die Ntx Sendeelemente des beweglichen Objekts (Tx) jeweils ein Impuls-Breitbandsignal senden,
- das Extrahieren direkt anhand der beim Empfangsschritt empfangenen Ntx Signale, ohne Zerlegen in Schmalbandsignale durchgeführt wird.

5. Verfahren nach einem der Ansprüche 1 bis 4, wobei die Auflösung des Gleichungssystems durch ein Verfahren vom Typ Suche des Minimums einer nichtlinearen Multivariablen-Funktion erhalten wird.

6. Verfahren nach einem der Ansprüche 1 bis 4, umfassend einen Auswahlschritt, um unter den im Extraktionsschritt gekennzeichneten Strecken die innerhalb eines gegebenen Meßzeitraums empfangenen energetischsten Strecken auszuwählen, wobei die Mindestanzahl von d1 bzw. d2 Strecken zwischen dem Sender und den festen Empfängern (Rx1, Rx2) mindestens 2 betragen soll.

7. System zur Lokalisierung eines kommunizierenden beweglichen Objekts (Tx), das mit wenigstens zwei Sendeelementen versehen ist, die geeignet sind, Schmalbandsignale auf mehreren Frequenzen oder Breitbandsignale zu senden, umfassend wenigstens zwei synchronisierte, eventuell örtlich gemeinsam aufgestellte feste Empfänger (Rx1, Rx2), die jeweils mit wenigstens zwei Empfangselementen versehen sind, wobei diese Empfangselemente geeignet sind, die durch jedes der Sendeelemente des beweglichen Objekts (Tx) gesendeten Signale zu empfangen, sowie umfassend eine Verarbeitungseinrichtung, die für die Durchführung des Verfahrens nach einem der vorhergehenden Ansprüche ausgelegt ist.

8. System nach Anspruch 7, wobei die Verarbeitungseinrichtung für jeden festen Empfänger (Rx1, Rx2) ein Modul zur Auswahl (2) der von dem festen Empfänger (Rx1, Rx2) empfangenen energetischsten Strecken, das vorzugsweise im Bereich dieses festen Empfängers (Rx1, Rx2) angeordnet ist, umfaßt.

9. System nach Anspruch 7, wobei die Verarbeitungseinrichtung ein von den festen Empfängern (Rx1, Rx2) geteiltes Modul zur Auswahl (2) der von den festen Empfängern (Rx1, Rx2) empfangenen energetischsten Strecken, das vorzugsweise im Bereich eines dieser festen Empfänger (Rx1, Rx2) angeordnet ist, umfaßt.

10. System nach einem der Ansprüche 7 bis 9, wobei die Verarbeitungseinrichtung für jeden festen Empfänger (Rx1, Rx2) ein Extraktionsmodul (1) für das Extrahieren der charakteristischen Daten der von dem festen Empfänger (Rx1, Rx2) empfangenen Strecken, das vorzugsweise im Bereich dieses festen Empfängers (Rx1, Rx2) angeordnet ist, umfaßt.

11. System nach einem der Ansprüche 7 bis 9, wobei die Verarbeitungseinrichtung ein von den festen Empfängern (Rx1, Rx2) geteiltes Extraktionsmodul (1) für das Extrahieren der charakteristischen Daten der von den festen Empfängern (Rx1, Rx2) empfangenen Strecken, das vorzugsweise im Bereich eines dieser festen Empfänger (Rx1, Rx2) angeordnet ist, umfaßt.

12. System nach einem der Ansprüche 10 und 11, wobei die Verarbeitungseinrichtung eine Verarbeitungseinheit (3) für die Berechnung - anhand der durch das oder die Extraktionsmodule (1) extrahierten Daten - der Position des Objekts (Tx) und der Hindernisse (A, B, C, D) in dem festen Referenzsystem, unabhängig von der Ausrichtung des Sendeelementnetzes des Objekts (Tx) umfaßt.

13. System nach Anspruch 12, **dadurch gekennzeichnet, daß** die Verarbeitungseinheit von den festen Empfängern (Rx1, Rx2) entfernt oder im Bereich eines dieser festen Empfänger (Rx1, Rx2) angeordnet ist.

14. System nach einem der Ansprüche 7 bis 13, wobei das Sendeelementnetz und die Empfangsnetze linear, rechteckig oder kreisförmig sind.

15. System nach einem der Ansprüche 7 bis 14 wobei die Empfänger (Rx1, Rx2) örtlich gemeinsam aufgestellt sind und wobei die Empfänger (Rx1, Rx2) wenigstens ein gemeinsames Empfangselement umfassen.

**Claims**

1. A method of locating a communicating mobile object (Tx) provided with an array of Ntx transmission elements, where Ntx is greater than or equal to two, said transmission elements being suitable for transmitting signals, the object being located in an environment having at least two stationary receivers (Rx1, Rx2) that are synchronized and optionally co-located, and that are provided respectively with Nrx1 and Nrx2 reception elements, where Nrx1 and Nrx2 are not less than two, said reception elements being suitable for receiving said signals transmitted by said transmission elements of said mobile object (Tx), said method comprising at least the following steps:

· transmitting at least one signal via each of said Ntx transmission elements of said object (Tx);
· receiving, via each of said Nrx1 and Nrx2 reception elements respectively of said two stationary receivers (Rx1, Rx2), said at least Ntx signals transited in the transmission step;
· probing each communication channel associated with each stationary receiver (Rx1, Rx2) and then performing a high resolution algorithm on the measurements obtained by the probing in order to extract the following data from said signals received in the reception step:

i) the angles between the respective arrival directions of the d1 and d2 paths (r1 to r4) on each stationary receiver (Rx1, Rx2) and a reference direction having a stationary frame of reference in the environment, where d1 and d2 are greater than or equal to two, the d1 and d2 paths taken into account designating respectively the number of paths between the object and one of the two stationary receivers, and the number of paths between the object and the other stationary receiver, which paths have not been subjected to more than a single reflection or diffraction on n real or fictitious obstacles (A, B, C, D) such that d1 + d2 = n;
ii) the relative angles between the respective starting directions of the d1 and d2 paths (r1 to r4) from said object (Tx); and
iii) the time differences between the arrivals of the d1 and d2 paths arriving respectively at Rx1 and Rx2, and the time differences between the arrivals of the paths arriving at other receivers;
so as to determine a system of 2 x (n+1) equations in which the 2 x (n+1) unknowns are the coordinates of the object (Tx) and of said real or fictitious obstacles (A, B, C, D) in said stationary frame of reference; and

· on the basis at least of said extracted data, calculating the positions of said object (Tx) and of said obstacles (A, B, C, D) in said stationary frame of reference, independently of the orientation of said array of transmission elements of said object (Tx), said calculation including a step of solving said system of equations.

2. A method according to claim 1, wherein:

· during the transmission step, the Ntx transmission elements of the mobile object (Tx) respectively transmit Nf narrow-band signals that are optionally modulated or pulse signals, on different frequencies, where Nf is greater than or equal to two;
· during said reception step, each of the Nrx1 and Nrx2 reception elements of said two stationary receivers (Rx1, Rx2), respectively, receive the Ntx x Nf signals transmitted in the transmission step; and
· the extraction is performed on the basis of the Ntx x Nf signals received in the reception step.

3. A method according to claim 1, wherein:

· during the transmission step, each of the Ntx transmission elements of the mobile object (Tx) transmits a modulated or pulse broad-band signal; and

· the extraction is performed on the basis of the Ntx signals received in the reception step, each of said Ntx signals being resolved, prior to or during the extraction step, into Nf narrow-band signals at different frequencies, where Nf is greater than or equal to two.

4. A method according to claim 1, wherein:

· during the transmission step, each of the Ntx transmission elements of the mobile object (Tx) transmits a broad-band pulse signal; and

· the extraction is performed directly from the Ntx signals received in the reception step, without resolving them into narrow-band signals.

5. A method according to any one of claims 1 to 4, wherein the system of equations is solved by a method of the type involving searching for the minimum of a multivariable non-linear function.

6. A method according to any one of claims 1 to 4, including a selection step of selecting among the paths **characterized in** the extraction step, those paths that have the highest energy and that are received in a given measurement time lapse, the minimum numbers of paths d1 and d2 respectively between the transmitter and the stationary receivers (Rx1, Rx2) being at least two.

7. A method of locating a communicating mobile object (Tx) provided with at least two transmission elements suitable for transmitting narrow-band signals on a plurality of frequencies or broad-band signals, the system comprising at least two synchronized stationary receivers (Rx1, Rx2) that are optionally co-located, each being provided with at least two reception elements, said reception elements being suitable for receiving said signals transmitted by each of said transmission elements of said mobile object (Tx) and further comprising a processor device configured to perform the method according to anyone of preceding claims.

8. A system according to claim 7, wherein the processor device comprises, for each stationary receiver (Rx1, Rx2), a selection module (2) for selecting the highest-energy paths received by said stationary receiver (Rx1, Rx2), and is preferably located at said stationary receiver (Rx1, Rx2).

9. A system according to claim 7, wherein the processor device comprises a module that is shared by said stationary receivers (Rx1, Rx2) for selecting (2) the highest-energy paths received by said stationary receivers (Rx1, Rx2), the module preferably being located at at least one of said stationary receivers (Rx1, Rx2).

10. A system according to any one of claims 7 to 9, wherein the processor device comprises, for each stationary receiver (Rx1, Rx2), an extraction module (1) for extracting data characteristic of the paths received by said stationary receiver (Rx1, Rx2), and preferably located at said stationary receiver (Rx1, Rx2).

11. A system according to any one of claims 7 to 9, wherein the processor device comprises an extraction module (1) that is shared by said stationary receivers (Rx1, Rx2), the module serving to extract data characteristic of the paths received by said stationary receivers (Rx1, Rx2), and preferably being located at one of said stationary receivers (Rx1, Rx2).

12. A system according to claim 10 or claim 11, wherein the processor device comprises a processor unit (3) for responding to the data extracted by the extraction module(s) (1) to calculate the positions of the object (Tx) and of the obstacles (A, B, C, D) in the stationary frame of reference, independently of the orientation of the array of transmission elements of said object (Tx).

13. A system according to claim 12, **characterized in that** the processor unit is remote from the stationary receivers (Rx1, Rx2), or is located at one of said stationary receivers (Rx1, Rx2).

14. A system according to any one of claims 7 to 13, wherein the array of transmission elements and the reception arrays are of linear, rectangular, or circular shape.

15. A system according to any one of claims 7 to 14, wherein the receivers (Rx1, Rx2) are co-located, and wherein said receivers (Rx1, Rx2) include at least one reception element in common.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060217132 A1

**Littérature non-brevet citée dans la description**

- **A. SAWIDES ; C. HAN ; M. B. STRIVASTAVA.** Dynamic Fine-Grained Localization in Ad-Hoc Networks of Sensors. *Mobile Computing and Networking,* 2001, 166-179
- **D. NICULESCU ; B. NATH.** Ad-hoc positioning system (APS) using AoA. *Proceedings of IEEE INFOCOM 2003,* Avril 2003, 1734-1743
- **K. KAEMARUNGSI ; P. KRISHNAMURTHY.** Modeling of Indoor Positioning Systems based on location Fingerprinting. *IEEE INFOCOM 2004,* 2004
- **Y. CHEN ; H. HOBAYASHI.** Signal Strength Based Indoor Geolocation. *Processings of IEEE ICC,* 2002, 436-439